Europäisches Patentamt

European Patent Office

Office européen des brevets

(11) Publication number: 0 244 928
A1

# EUROPEAN PATENT APPLICATION

(21) Application number: 87301082.1

(51) Int. Cl.⁴: **G06F 9/44**

(22) Date of filing: 06.02.87

(30) Priority: 01.05.86 GB 8610658

(43) Date of publication of application:
**11.11.87 Bulletin 87/46**

(84) Designated Contracting States:
**AT BE CH DE ES FR GB IT LI NL SE**

(71) Applicant: **The British Petroleum Company p.l.c.**
**Britannic House Moor Lane**
**London EC2Y 9BU(GB)**

(72) Inventor: **Harrison, John Norman**
**The British Petroleum Co., p.l.c., Chertsey Road**
**Sunbury-on-Thames Middlesex, TW16 7LN,(GB)**
Inventor: **Morris, Derek Owen**
**90 Acorn Avenue**
**Cowfold West Sussex, RH13 8RC,(GB)**
Inventor: **Mottershead, Christopher John,**
**The British Petroleum Co., p.l.c., Chertsey Road**
**Sunbury-on-Thames Middlesex, TW16 7LN(GB)**
Inventor: **Roberts, Keith Duncan**
**The British Petroleum Co., p.l.c., Chertsey Road**
**Sunbury-on-Thames Middlesex, TW16 7LN(GB)**

(74) Representative: **Ryan, Edward Terrence et al**
**BP INTERNATIONAL LIMITED, Patents Division Chertsey Road**
**Sunbury-on-Thames Middlesex, TW16 7LN(GB)**

(54) Improvements relating to control flow in computers.

(57) A computer comprises a computation processor and a control linked to the computation processor. A compiler converts source code with intermingled control flow and computation instructions into separate computation and control flow programs. The computation program is executed on the computation processor. The control flow program is executed on a control flow processor in the controller.

The arrangement is particularly useful for running programs in high level languages on SIMD computers having a plurality of processing elements.

Xerox Copy Centre

## IMPROVEMENTS RELATING TO CONTROL FLOW IN COMPUTERS

The present invention relates to improvements in the control flow in computers containing at least two processors.

In computers having a single processor the control flow within the program usually results from a processor executing control flow instructions interspersed with data manipulation instructions within a single instruction stream fed to the processor. Computers having more than one processor in order to increase the speed of computation are known. One known type comprises a computation processor having (1) a plurality of individual processing elements and (2) a controller which coordinates processing elements and which itself contains a processor used in the operation of the control and coordination function. Such computers are for example disclosed in US 4 101 960 and by Requa and McGraw in "The Piecewise Data Flow Architecure: Architectural Concepts" (IEEE Transactions on Computers, May 1983). In the above computers program blocks containing both control flow instructions and instructions for the computation processor are initially passed to the controller processor where control flow instructions are strictly stripped out and executed by the controller and the data processing instructions are then passed on to the computation processor.

It is desirable to be able to program a computer in a conventional high level language, rather than in machine code or assembly language. However many multiprocessor computers are not programmable in standard high level languages. The paper by Requa and McGraw discusses the problem of compiling a high level language. However the type of computer architecture proposed by Requa and McGraw is restricted in the type of program which can be run on it efficiently.

It is therefore an object of the invention to make improvements in the way in which programs written in high level languages can be used in computers having more than one processor.

Accordingly, the present invention provides a computer which comprises:

(1) a computation processor,

(2) a controller linked to said computation processor,

(3) a means for accepting a representation of source code in which control flow instructions, and computation instructions are intermingled,

(4) a compiling machine for generating from said representation of source code

(a) a computation processor program comprising a series of blocks wherein any instruction blocks are SESE blocks, and

(b) a control flow program for controlling the order in which the SESE blocks are executed by the computation processor,

(5) the controller comprising

(i) a program input means for inputing said programs into the controller,

(ii) a control flow processor for executing the control flow program, and

(iii) means for passing said SESE blocks to the computation processor under the control of the control flow processor.

According to another aspect of the present invention a process for operating a computer having at least two processors comprises

(1) converting a representation of source code in which control flow instructions, and computation instructions are intermingled into two separate programs namely

(a) a computation program wherein the instruction blocks are SESE blocks, and

(b) a control flow program for controlling the order in which the SESE instruction blocks are executed by a computation processor,

(2) executing the control flow program on a control flow processor,

(3) executing the computation program on the computation processor, and

(4) altering the flow in the computation program in accordance with the program executed in the control flow processor.

The term "processor" is used by persons skilled in the design and construction of computers to refer to the total structure used to carry out a specific processing operation. It is also used to refer to a unit which carries out a specific processing step within the total structure. Thus for example an "array processor" is a structure which carries out the processing of arrays of data. The array processor may be made up of a plurality of individual processing elements. Each processing element may comprise memory and a "processor" which has a single arithmetic and logic unit (ALU). Skilled persons will however readily understand from the context the sense in which "processor" is used on any given occasion.

The computation processor may carry out computation on binary numbers so as to give answers to numerical problems. It may also carry out computations on binary numbers representing codes for alphabetic characters as part of text manipulation.

"SESE" block is a term well known to those concerned with the design of compilers. A "SESE" block as used in the present application has a single entry point and a single exit point and has a sequential flow of control within the block i.e. there are no loops or jumps or sub-routine calls within the block.

The source program presented in a high level language may be generated in a variety of ways. In general alphanumeric characters representing the symbols used in the high level language will be converted into a code stored in some form of storage medium, e.g. magnetic disc. This code can then be extracted from the storage medium and fed to the compiling machine.

The compiling machine can be a special purpose machine if there is an overriding need for a high speed of compilation. However in general the compilation machine function will be provided by a general purpose computer under the control of a compiler program. There is an extensive literature on the design of compilers and the usual elements for the design of a compiler for a given high level language e.g. lexical analysers, syntax analysers, and code generators are well known. A particularly preferred configuration of compiling machine for use in the present invention has the following features.

(1) The compiling machine accepts as input the source program presented in a high level language.

(2) The source program is lexically, syntactically, and semantically analysed to produce an intermediate form representing the source program using standard techniques.

(3) The intermediate form is passed to what is generally known as an "optimiser" where "basic blocks" are detected again using standard techniques. These basic blocks are subsequently transformed into single entry, single exit (SESE) blocks. Control flow instructions are identified in the transformation from basic blocks to SESE blocks.

(4) The SESE blocks are passed to a code generator to generate and output the computation processor program.

(5) The control flow instructions are passed to a code generator to generate and output the control flow program.

The two output programs generated by the compiling machine may be such as to be capable of being executed directly in the control flow processor and in the computation processor. However it may be preferable to generate intermediate code which is a general purpose program code not executable on any given processor but which may be readily converted to code for any given processor. This may enable a single compiling machine to be used for a variety of different processors.

For further information about the design of compilers and the terms used refer to "Principles of Compiler Design", Alfred V. Aho, Jeffrey D. Ullman, Addison-Wesley, 1977, and "Compiler Construction for Digital Computers", David Gries, Wiley, 1971, and "Understanding and Writing Compilers", Richard Bornat, MacMillan, 1979. A discussion of basic blocks is found in these texts at pages 412-413 (Aho, Ullman), 258 (Gries), and 160 (Bornat). Aho and Ullman give a definition of an algorithm for basic block detection at pages 412-413.

The two output programs may be supplied directly from the compiling machine to the controller. However it will generally be preferable to store the output programs on some type of intermediate storage before they are fed to the controller.

While it is generally convenient for the means for supplying the source program and the compiling machine to be physically adjacent to the controller and the computation processors, it is also possible for the different parts of the multiprocessor computer of the present invention to be in widely separated locations provided they are connected by suitable communications links.

As indicated above the high level language program may be compiled into separate machine code programs which are directly executable by the control flow processor and the computation processor. However the separate programs resulting from compilation may be in the form of intermediate code or in an assembly language. Each program is then subsequently converted into machine code for running on the processors by a suitable assembler. The design of assemblers is well known to those skilled in the art.

Where the program compiled for the control flow processor is an assembler program it may contain instructions of the following format namely: an instruction label for uniquely identifying the individual instruction, an instruction type identifier which causes a SESE block to be passed to the computation processor, a block identifier field identifying the SESE block to be passed to the computation processor, and the instruction label of at least one successor instruction to be executed in the control flow processor.

3

The assembler program will contain other instructions with a different format. Thus, for example the program may be terminated by an instruction having the format: an instruction label for uniquely identifying the instruction, and an instruction type identifier which causes execution of the control flow program to terminate.

Preferably the computation processor is provided with means for indicating to the control flow processor whether a test condition in the program executed by the computation processor has been satisfied. In such a case the instruction in the control flow processor assembly program which contains an instruction type identifier which causes a SESE block to be passed to the computation processor is followed by two different instruction labels. One of these is an instruction label for identifying the next instruction to be executed by the control flow processor if the test condition in the SESE block is satisfied. The other is the instruction label of a different instruction to be executed by the control flow processor if the test is not satisfied.

The machine code program executed by the control flow processor will have the labels following the instruction type identifier replaced by addresses of memory holding the control flow program, which will identify the instruction instead of the instruction labels.

The block identifier field which identifies which of the various SESE instruction blocks should be passed to the computation processor may be a label which is converted during assembly to a memory address. Preferably the SESE blocks are stored in instruction memory having individual addressable memory locations before the execution of the control flow program is started, and the SESE block identifier is the address of the memory location at which storage of the SESE block starts, together with length of the block or its end address.

As a demonstration of the compilation action an example of a program presented in a high level language will be converted to the same program in "pseudo" assembly language for a hypothetical stack based machine. Basic blocks and subsequently SESE blocks and control flow instructions will be identified in the pseudo machine language program and this will be converted to program representations of a type suitable for use by a computer of the type type disclosed in our copending application (Case 6147/6326).

The simple program discussed below could be used in a computer comprising a control flow processor and a single computational processor. A simple demonstration program has been used in order to set out the basic principles clearly and to avoid the need for the complex description which would be required if any attempt was made to describe the operation of a computer carrying out parallel processing with a plurality of processing elements. The demonstration program is a simple one and therefore does not contain sub-routine or procedure calls. However it is possible to implement sub-routines in the control flow program and some notes on how this may be done are included in the text which follows. The choice of FORTRAN as the high level language representation for the source program is arbitrary. Any high level language which can be used in the representation of a program which can be converted into an equivalent program in the pseudo machine language could have been chosen.

The example program is presented below in the high level language FORTRAN. The form and meaning of FORTRAN is defined in "American National Standard Programming Language FORTRAN", ANSI X3.9-1978. The example program calculates the sum of the first ten terms in the Fibonacci Series with starting values 1,1.

```
            PROGRAM FIBONA
      C
      C PROGRAM TO CALCULATE THE SUM OF THE FIRST TEN FIBONACCI NUMBERS -
      C    THE RESULT IS HELD IN VARIABLE ANSWER
      C
            INTEGER N1, N2, NEW, SUM, ANSWER
      C
            N1  = 1
            N2  = 1
            SUM = N1 + N2
      C
            DO 10 I=3,10
               NEW = N1 + N2
               N1  = N2
               N2  = NEW
               SUM = SUM + NEW
         10    CONTINUE
      C
            ANSWER = SUM
            END
```

The pseudo assembly language representation of the same program is listed below. The pseudo assembly language is generated as a result of the compiler having lexically, syntactically, and semantically analysed the source program. The techniques for performing these analyses are well known and may be found in any reference texts for compilers. The generated pseudo assembly language is for a hypothetical stack based machine. For a thorough discussion of stack based (or zero address) machines see "Introduction to Computer Architecture", Science Research Associates, Inc., 1975, Chapter 7, "Stack Computers", William M. McKeeman, pp 281-317. The comments to the right of the pseudo assembly instructions explain the use of the instructions.

```
                        PSEUDOCODE
            PUSH    1
            POP     N1      N1 = 1
            PUSH    1
            POP     N2      N2 = 1
            PUSH    N2
            PUSH    N1
            ADD
            POP     SUM     SUM = N1 + N2
            PUSH    10
            POP     I?E     Initialise loop limit = 10
            PUSH    1
            POP     I?S     Initialise loop step = 1
            PUSH    3
            SUBR
            POP     I       Initialise loop counter I to 3-1 = 2
      L1:   PUSH    I       Top of loop
            PUSH    I?S
            ADD
            POP     I       Increment loop counter I
            PUSH    I
            PUSH    I?E
            TSTLT           Test if loop limit less than I
            BRC     L2      Conditional branch to exit loop
            PUSH    N2
            PUSH    N1
            ADD
            POP     NEW     NEW = N1 + N2
            PUSH    N2
            POP     N1      N1 = N2
            PUSH    NEW
            POP     N2      N2 = NEW
            PUSH    NEW
            PUSH    SUM
            ADD
            POP     SUM     SUM = SUM + NEW
            BR      L1      Unconditional branch to top of loop
      L2:   PUSH    SUM     Exit loop
            POP     ANSWER  ANSWER = SUM
```

The pseudo assembly language of the above listing with the basic blocks detected and marked is shown below. This basic block detection is performed by using an algorithm from "Principles of Compiler Design", Alfred V. Aho, Jeffrey D. Ullman, Addison-Wesley, 1977, pp 412-413, modified to be consistent with the terminology and hypothetical stack based machine described in this text. The algorithm is as follows:

Input: A sequence of zero address instructions.

Output: A list of basic blocks with each zero address instruction in exactly one block.

Method 1. The compiler first determines the set of leaders, the first instructions of basic blocks. The rules used are the following:

(i) the first instruction is a leader.

(ii) Any instruction which is the target of a conditional or unconditional branch instruction is a leader.

(iii) Any instruction which immediately follows a conditional branch instruction is a leader.

2. For each leader construct its basic block, which consists of the leader and all instructions up to, but not including, the next leader or the end of the program. Any instructions are not placed in a block can never be executed and may now be removed, if desired.

The above algorithm can be modified to deal with sub-routines by including in step 1 an additional sub-step:

(iv) any instruction which follows a sub-routine call instruction is a leader.

The whole algorithm can be applied to each sub-routine individually.

```
                 PSEUDOCODE WITH BASIC BLOCKS MARKED
        PUSH      1                         Leader by rule 1(i)
        POP       N1
        PUSH      1
        POP       N2
        PUSH      N2
        PUSH      N1
        ADD
        POP       SUM       Basic Block No 1
        PUSH      10
        POP       I?E
        PUSH      1
        POP       I?S
        PUSH      3
        SUBR
        POP       I
    ------------------------------------------------
L1:     PUSH      I                         Leader by rule 1(ii)
        PUSH      I?S
        ADD
        POP       I         Basic Block No 2
        PUSH      I
        PUSH      I?E
        TSTLT
        BRC       L2
    ------------------------------------------------
        PUSH      N2                        Leader by rule 1(iii)
        PUSH      N1
        ADD
        POP       NEW
        PUSH      N2
        POP       N1
        PUSH      NEW       Basic Block No 3
        POP       N2
        PUSH      NEW
        PUSH      SUM
        ADD
        POP       SUM
        BR        L1
    ------------------------------------------------
L2:     PUSH      SUM       Basic Block No 4  Leader by rule 1(ii)
        POP       ANSWER
```

The SESE blocks derived from the basic blocks listed above are listed below under the heading "SESE BLOCKS". The control flow instructions derived from the basic blocks are listed below under the heading "CONTROL FLOW INSTRUCTIONS".

A multiprocessor computer comprising a controller and a plurality of processing elements is described below after the description of the procedure for producing the control flow and computation programs. The processing elements can communicate a datum value to the controller which depends on whether a test condition in the program they are executing is met by all the processing elements or not. The datum value

7

can be regarded as the result of a vote by the processing elements. The vote is true if the test condition is met by all the processing elements and false if the test condition is not satisfied for all the processing elements. The use of the vote-true and vote-false instructions mentioned below in the description of the compiling process is indicated in the description of the multiprocessor computer.

The way that the vote-true and vote-false instructions can be used is indicated in the specific description below where a signal (the vote signal) generated by the computation processor is passed back to the controller and used to decide the future flow of the program. The signal is described as a "vote" signal because in the specific embodiment program flow is dependent on whether all processing elements give the same signal (unanimous vote).

A control flow instruction has the following format: L1 BRD (id) → L2 | L3
where : L1 is the instruction label,
id is the SESE block identifier field,
L2 is the vote false instruction label field,
L3 is the vote true instruction label field.

If the vote-true instruction label field and the preceding bar are omitted then it is assumed that the vote-true instruction label field is the same as the vote false instruction label field. The vote true instruction label field and vote-false instruction label field refer to other defined instruction labels. Additionally, the label of the first control flow instruction to be executed is found after "Entry - and the control flow execution ceases at an instruction label followed by "Exit".

The algorithm used by the compiler to derive the SESE blocks and control flow instructions from the list of basic blocks is as follows:
Input: A list of basic blocks with each zero address instruction in exactly one block.
Output: A list of single entry single exit (SESE) blocks and a list of control flow instructions determining the execution order of the SESE blocks.

Method:

1) assign a unique block identifier to each basic block;

2) for each basic block mark the beginning of the block with "block-start" and the block identifier, and mark the end of the block with "block-end" and the block identifier;

3) for each basic block generate a single control flow instruction with:
    i) a unique instruction label,
    ii) the SESE block identifier field set to the block identifier of the basic block,
    iii) the vote false instruction label field and vote true instruction label field as yet unidentified;

4) Generate the control flow entry point by referring, after the control flow program start instruction e.g. "Entry - , to the instruction label of the control flow instruction with the SESE block identifier set to the basic block identifier of the first basic block;

5) generate the control flow exit point by creating an additional unique instruction label and follow it with a control flow program termination instruction e.g. "Exit";

6) for each control flow instruction generated in step 3 above:
    i) identify the final instruction in the basic block referred to by the SESE block identifier field in the current control flow instruction;
if the instruction is a conditional branch instruction, BRC, go to step vi;
if the instruction is an unconditional branch instruction, BR, go to step v;
otherwise, go to step ii;
    ii) if the basic block referred to by the SESE block identifier field in the current control flow instruction is the last basic block in the input list of basic blocks, go to step iv;
Otherwise, go to step iii;
    iii) find the control flow instruction with the SESE block identifier field set to the basic block identifier of the following basic block. (The following basic block is the block immediately following the current basic block. The current basic block is the block referred to by the SESE block identifier in the current control flow instruction); enter the instruction label of the found control flow instruction in the vote false instruction label field of the current control flow instruction.
go to step vii;
    iv) enter the instruction label of the control flow exit point in the vote false instruction label field of the current control flow instruction; go to step vii;

8

v) find the control flow instruction with the SESE block identifier field set to the basic block identifier of the basic block containing the destination label of the branch instruction; enter the instruction label of the found control flow instruction in the vote false instruction label field of the current control flow instruction; go to step vii;

vi) before the conditional branch instruction, but after the preceding test instruction, add a "vote" instruction; find the control flow instruction with the SESE block identifier field set to the basic block identifier of the basic block containing the destination label of the branch instruction; enter the instruction label of the found control flow instruction in the vote true instruction label field of the current control flow instruction; go to step ii.

vii) return to step i for the next control flow instruction generated in step 3 above;

7) for each basic block, delete all labels and all conditional and unconditional branch instructions.

The above process can be readily extended to deal with sub-routine call and return if desired.

```
                                              SESE  BLOCKS
            block_start    (c_1)
                    PUSH   1
                    POP    N1
                    PUSH   1
                    POP    N2
                    PUSH   N2
                    PUSH   N1
                    ADD
                    POP    SUM
                    PUSH   10
                    POP    I?E
                    PUSH   1
                    POP    I?S
                    PUSH   3
                    SUBR
                    POP    I
            block_end      (c_1)

            block_start    (c_2)
                    PUSH   I
                    PUSH   I?S
                    ADD
                    POP    I
                    PUSH   I
                    PUSH   I?E
                    TSTLT
                    vote
            block_end      (c_2)

            block_start    (c_3)
                    PUSH   N2
                    PUSH   N1
                    ADD
                    POP    NEW
                    PUSH   N2
                    POP    N1
                    PUSH   NEW
                    POP    N2
                    PUSH   NEW
                    PUSH   SUM
                    ADD
                    POP    SUM
            block_end      (c_3)

            block_start    (c_4)
                    PUSH   SUM
                    POP    ANSWER
            block_end      (c_4)
```

```
                    CONTROL FLOW INSTRUCTIONS

                 Entry          —   L1
         L1      BRD (c_1)      —   L2
         L2      BRD (c_2)      —   L3    | L4
         L3      BRD (c_3)      —   L2
         L4      BRD (c_4)      —   L5
         L5      Exit
```

The control flow and computation instruction programs after conversion (if necessary) to the machine code used by the respective processors, may conveniently be stored in control flow memory and an instruction memory from which they are dispatched to their respective processors.

The control flow and computation instruction memories mentioned above are memories holding separate sequences of instructions for the control flow processor and the computation processor. They are to be distinguished from registers within processors which temporarily hold control flow instructions stripped from a block of instructions containing both control flow and computation instructions.

The above discussion of the invention has been in connection with this application to a system consisting of a single control flow processor and a single computation processing element. However the present invention is particularly advantageous when applied to systems carrying out computation in parallel in a computation processor comprising a plurality of processing elements. Computers comprising a plurality of individual processing elements operating in SIMD or lock-step mode are well known. Such computer systems are for example discussed in Stone et al, "Introduction to Computer Architecture, SRA Research Associates Inc", 1975, pages 327-354.

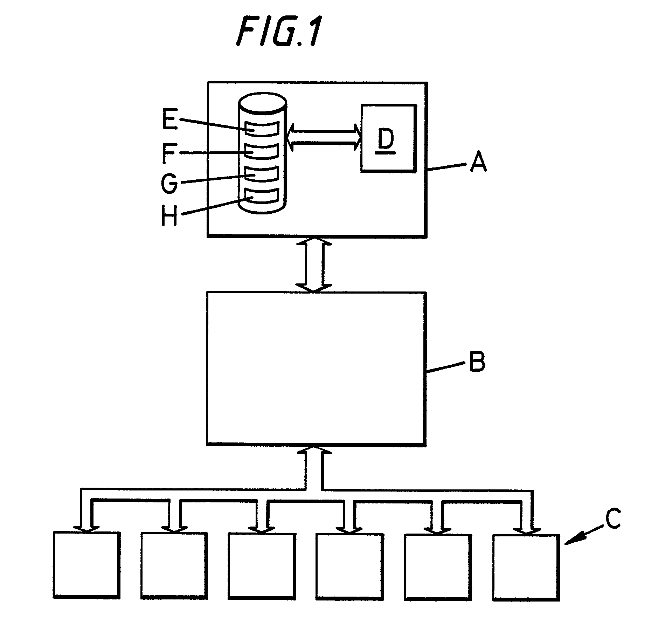

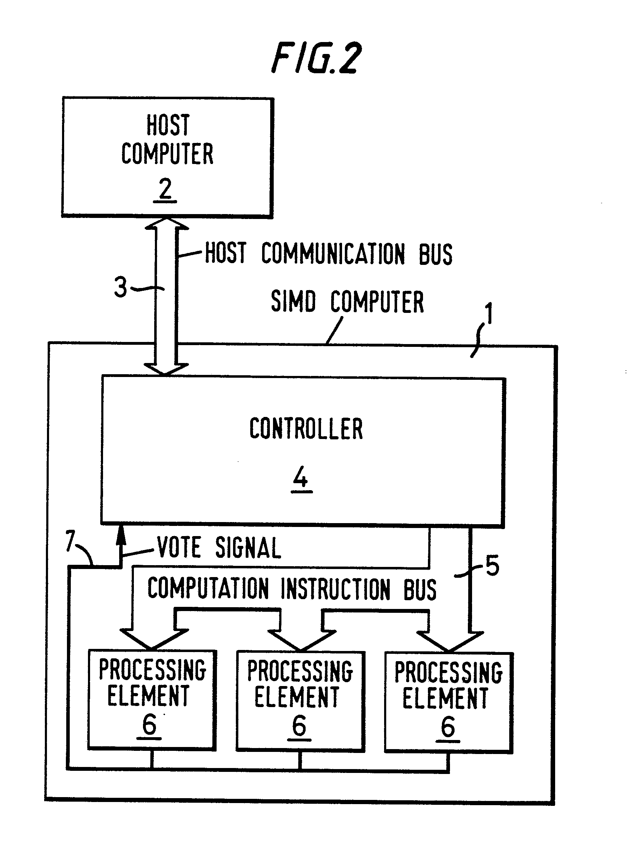

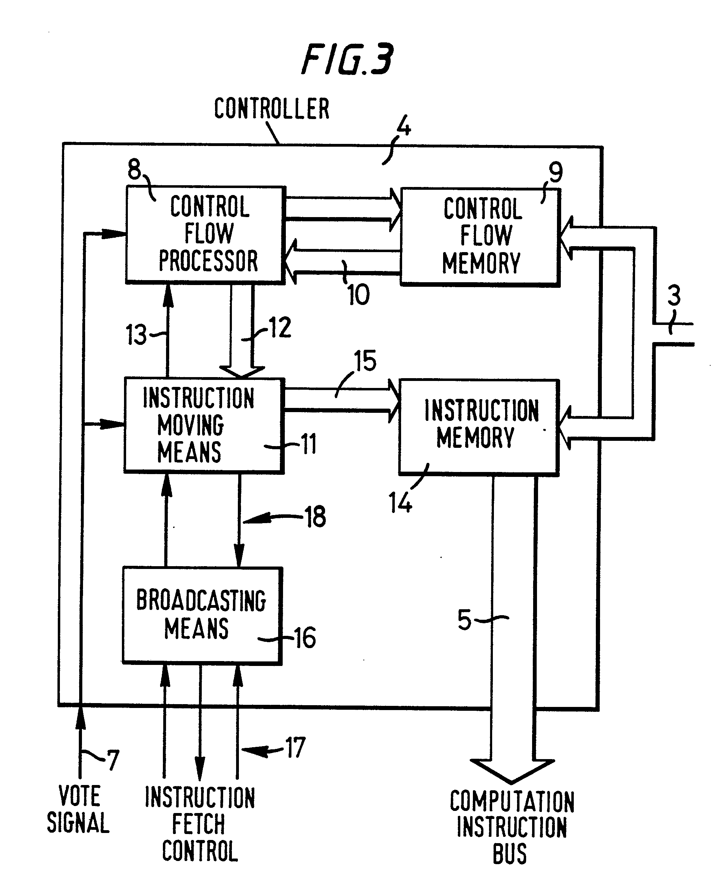

The present application is particularly suitable for use with the computer disclosed in our copending application (Case 6147.6326). The implementation of present invention with such a computer will now be described with reference to the drawings where Figure 1 is a diagrammatic representation of a multiprocessor computer in which a host computer is connected to a controller, which is in turn connected to a plurality of processing elements, Figure 2 is an alternative representation of the arrangement shown in Figure 1, but with only three processing elements shown, and Figure 3 is a diagrammatic representation of the controller.

Referring to Figure 1 a host computer A is connected to a controller B which in turn is connected to a plurality of processing elements indicated generally at C. The host computer is concerned with overall operation of the system and with communication outside. The host computer A is provided with a processor D which controls the operation of the host and can be programed to act as a compiler by means of a compiler program introduced from disc file E. When acting as a compiler source code from disc file F is converted into two separate programs, a computation program and a control flow program which are then stored on disc files G and H. In the operation of the multiprocessor computer these programs are fed from the disc files through the host computer A to memories within the controller B.

The compiling process has been described above with reference to Figure 1. The further operation of the computer will be discussed with reference to Figures 2 and 3.

Computers generally work with groups (words) of a given length of binary digits (bits). An instruction may take up several words so that the dispatch of a complete instruction may involve the successive dispatch of several words stored at individual addresses in memory. In the description references to the dispatch of an instruction are references to the dispatch of an individual word, which may contain a complete instruction or part of an instruction.

Figure 2 shows the SIMD computer 1 (corresponding to the elements B and C of Figure 1 connected to the host computer 2 (corresponding to A of Figure 1) by host communication bus 3. The controller 4 is connected to a plurality of processing elements 6 of which only three are shown in the interests of clarity.

Instructions can be issued to the processing elements by way of the computation instruction bus 5. The processing elements can influence the flow of control by means of the vote signal line 7 connected to the controller.

Reffering now to Figure 3, the control flow processor 8 fetches instructions relating to control flow from the control flow memory 9 along bus 10. Memory 9 is the memory in the controller to which the control flow program is passed from the host computer (by bus 3) as explained in connection with Figure 1. The control flow processor 8 selects blocks of computation instructions for execution by the processing elements, this selection being in accordance with the control flow instructions. The instruction moving means 11 is provided with address information by the control flow processor along bus 12. Control signals can be passed back to control flow processor 8 by line 13. The instruction moving means 11 provides the instruction memory 14 with the address of an individual computation instruction on bus 15. The instruction memory 14 is a memory which holds the computation program produced by the compiler and fed to the controller by bus 3.

The computation instruction is sent to the processing elements over the computation instruction bus 5. The instruction moving means 11 generates a sequence of computation instruction addresses thus causing an entire block of instructions to be issued to the processing elements in a sequential manner. Broadcasting means 12 controls the time at which the instruction moving means changes to the next computation instruction address in a sequence. The broadcasting means 16 responds to common control signals from the processing elements, along control lines indicated generally or 17, in order to ensure that the next computation instruction is not dispatched until all the processing elements are ready to receive it. Control lines 18 enable control signals to be exchanged between the instruction moving means and the broadcasting means.

The control flow processor fetches a control flow instruction from the control flow memory. The control flow program is represented by a linked list of control flow instructions which the control flow processor follows by means of a control flow instruction pointer. A control flow instruction may identify a block of computation instructions to be executed by the processing elements. Such a block is identified by its address within the instruction memory and its length (the number of computation instructions in the block).

The control flow processor passes the block identification information to the instruction moving means which addresses the instruction memory with the address of the first computation instruction in the block. When the broadcasting means determines that all the processing elements are ready to receive the next computation instruction, the instruction moving means increments the address it is supplying to the instruction memory. This has the effect of selecting the next computation instruction in the block, as a block of instructions is stored in contiguous locations within the instruction memory. The instruction moving means also decrements a register containing the number of computation instructions yet to be dispatched, this register having been initially loaded with the length of the block. When this register contains a value of zero, the entire block has been dispatched and the instruction moving means signals the completion to the control flow processor.

Some control flow instructions do not refer to computation instructions and are therefore processed completely by the control flow processor. Subroutine call and return operations are processed in this manner, using a stack within the control flow processor.

A control flow instruction may have two possible successors, in which case one of the two must be selected. The control flow processor selects one of the two successors in accordance with the value of the vote signal being communicated from the processing elements. Each processing element has a single bit voting register which it may set to a true or false value. The setting of the registers is performed by the vote instruction discussed above in connection with compilation. The vote signal is the logical AND of all these voting registers - in other words, the vote signal is false unless all the voting registers are true. By this means, data dependent control flow is achieved.

## Claims

1. A computer which comprises:
    (1) a computation processor,
    (2) a controller linked to said computation processor,
    (3) a means for accepting a representation of source code in which control flow instructions, and computation instructions are intermingled,
    (4) a compiling machine for generating from said representation of source code
    (a) a computation processor instruction/data program comprising a series of blocks wherein any instruction blocks are SESE blocks, and
    (b) a control flow program for controlling the order in which the SESE blocks are executed by the computation processor,
    (5) the controller comprising
    (i) a program input means for inputing said programs into the controller,
    (ii) a control flow processor for executing the control flow program, and
    (iii) means for passing the computation processor program to the computation processor under the control of the control flow processor.

2. A computer according to claims 1 wherein the controller has an instruction memory for storing the computation processor program and a control flow memory for storing the control flow program, said memories being linked to the program input means.

3. A computer according to claim 1 or 2 wherein the computation processor comprises a plurality of processing elements capable of operating in SIMD mode.

4. A process for operating a computer having at least two processors which comprises

(1) converting a representation of source code in which control flow instructions, and computation instructions are intermingled into two separate programs namely

(a) a computation program wherein the instruction blocks are SESE blocks, and

(b) a control flow program for controlling the order in which the SESE instruction blocks are executed by a computation processor,

(2) executing the control flow program on a control flow processor,

(3) executing the computation program on the computation processor, and

(4) altering the flow in the computation program in accordance with the program executed in the control flow processor.

5. A method of operating a computer according to claim 4 which comprises converting the representation of source code into an control flow assembler program comprising instructions of the following format:

an instruction label for uniquely identifying the individual instruction,

an instruction type identifier which causes a SESE block of instructions/data to be passed to the computation processor,

a block identifier field identifying the SESE block to be passed to the computation processor, and

the instruction label of at least one successor instruction to be executed in the control flow processor.

6. A method according to claim 5 wherein the control flow program is terminated by an instruction having the format:

an instruction label for uniquely identifying the instruction, and an instruction type identifier which cause the execution of the control flow program to terminate.

7. A method according to any one of claims 4 to 6 wherein the computation processor is provided with means for indicating to the control flow processor whether a test condition in the program executed by the computation processor has been satisfied which comprises converting the representation of source code into a control flow assembler program having instructions of the format: an instruction label for uniquely identifying the instruction, an instruction identifier which causes a SESE block to be passed to the computation processor,

a block identifier field which identifies the SESE block to be passed to the computation processor,

an instruction label for identifying the next instruction to be executed by the control flow processor if a test condition in the SESE block is satisfied, and

an instruction label of a different instruction to be executed by the control flow processor if the test is not satisfied.

8. A method of operating a computer according to any one of claims 4 to 7 wherein the computation program and the control flow program are produced by carrying out on a computer the steps of first converting the representation of source code into a list of basic blocks, converting the list of basic blocks into a list of SESE blocks and a list of control flow instructions, and then determining the execution order of the SESE blocks by carrying out the following steps,

1) assign a unique block identifier to each basic block;

2) for each basic block mark the beginning of the block with "block-start" and the block identifier, and mark the end of the block with "block-end" and the block identifier;

3) for each basic block generate a single control flow instruction with:

i) a unique instruction label,

ii) the SESE block identifier field set to the block identifier of the basic block,

iii) the vote false instruction label field and vote true instruction label field as yet undefined;

4) Generate the control flow entry point by referring, after the control flow program start instruction e.g. to the instruction label of the control flow instruction with the SESE block identifier set to the basic block identifier of the first basic block;

5) generate the control flow exit point by creating an additional unique instruction label and follow it with a control flow program termination instruction.

6) for each control flow instruction generated in step 3 above:

13

i) identify the final instruction in the basic block referred to by the SESE block identifier field in the current control flow instruction;

if the instruction is a conditional branch instruction, go to step vi;

if the instruction is an unconditional branch instruction, go to step v;

otherwise, go to step ii;

ii) if the basic block referred to by the SESE block identifier field in the current control flow instruction is the last basic block in the input list of basic blocks, go to step iv;

otherwise, go to step iii;

iii) find the control flow instruction with the SESE block identifier field set to the basic block identifier of the following basic block; enter the instruction label of the found control flow instruction in the vote false instruction label field of the current control flow instruction;

go to step vii;

iv) enter the instruction label of the control flow exit point in the vote false instruction label field of the current control flow instruction;

go to step vii;

v) find the control flow instruction with the SESE block identifier field set to the basic block identifier of the basic block containing the destination label of the branch instruction; enter the instruction label of the found control flow instruction in the vote false instruction label field of the current control flow instruction; go to step vii;

vi) before the conditional branch instruction, but after the preceding test instruction, add a "vote" instruction; find the control flow instruction with the SESE block identifier field set to the basic block identifier of the basic block containing the destination label of the branch instruction; enter the instruction label of the found control flow instruction in the vote true instruction label field of the current control flow instruction; go to step ii.

vii) return to step i for the next control flow instruction generated in step 3 above;

7) for each basic block, delete all labels and all conditional and unconditional branch instructions.

# FIG.1

# FIG.2

HOST
COMPUTER
2

— HOST COMMUNICATION BUS

3 —

SIMD COMPUTER

1

CONTROLLER

4

7 — VOTE SIGNAL

5

COMPUTATION INSTRUCTION BUS

| PROCESSING ELEMENT 6 | PROCESSING ELEMENT 6 | PROCESSING ELEMENT 6 |

FIG.3

0 244 928

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | THE 7th ANNUAL SYMPOSIUM ON COMPUTER ARCHITECTURE CONFERENCE PROCEEDINGS IEEE, 6th-8th May 1980, pages 168-173; Dr. K.E. BATCHER: "Architecture of a massively parallel processor" * Page 171, right-hand column, line 15 - page 172, left-hand column, line 25; page 172, left-hand column, lines 1-29 * | 1-4 | G 06 F 9/44 |
| A | EP-A-0 035 647 (IBM)(Published: 16-09-1981) * Page 1, lines 21-24; page 3, line 10 - page 4, line 11; page 5, lines 17-21 * | 1,3-5, 7-8 | |
| A | PROCEEDINGS IECON '84, vol. 1, 22nd-26th October 1984, pages 521-525, Tokyo, JP; F. KOBAYASHI et al.: "A compiler for multi-microprocessor control using the forth programming language" * Page 521, left-hand column, lines 29-37; right-hand column, lines 1-22 * | 1 | **TECHNICAL FIELDS SEARCHED (Int. Cl.4)** G 06 F 9/44 |

The present search report has been drawn up for all claims

| Place of search | Date of completion of the search | Examiner |
|---|---|---|
| THE HAGUE | 23-04-1987 | LEPEE W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82